# EUROPÄISCHE PATENTANMELDUNG

(11) **EP 1 923 124 A1**
(43) Veröffentlichungstag der Anmeldung: **21.05.2008**
(21) Anmeldenummer: 07021875.5
(22) Anmeldetag: 12.11.2007
(51) Int. Cl.: B01D 53/56

(54) **Verfahren zur Reinigung von nitrose Gase enthaltenden Abgasen**

(30) Priorität: 16.11.2006 DE 102006054972
(71) Anmelder: M+W Zander Facility Engineering Limited, Singapore 609920 (SG)
(72) Erfinder: Schottler, Martin, Dr.-Ing., 70197 Stuttgart (DE)
(74) Vertreter: Jackisch-Kohl, Anna-Katharina

(57) **Zusammenfassung**

Verfahren zur Reinigung von nitrose Gase enthaltenden Abgasen. Zur Reinigung wird das Abgas durch eine Waschlösung (2) geleitet, die eine reduzierende Komponente aufweist, mit der die nitrosen Gase (NOₓ) im Abgas (4) zu Stickstoff reduziert werden. Damit die nitrosen Gase (NOₓ) günstig, zeitsparend und zuverlässig aus den Abgasen (4) entfernt werden können, werden als Komponente zur Reduktion der nitrosen Gase (NOₓ) Ammoniumionen (NO₄⁺) verwendet. Sie entfalten in saurer Lösung eine Waschwirkung. Die für die Ammoniumionen (NO₄⁺) eingesetzten Mittel, beispielsweise (NH₄)₂SO₄ oder Ammoniakgas, sind kostengünstige Komponenten, die sogar als Abfallprodukte in Betrieben häufig anfallen. Das Verfahren wird bevorzugt bei der Herstellung von Solarzellen, insbesondere Fotovoltaikzellen, eingesetzt.

## Beschreibung

Die Erfindung betrifft ein Verfahren zur Reinigung von nitrose Gase enthaltenden Abgasen nach dem Oberbegriff des Anspruches 1.

Für die Entfernung von nitrosen Gasen aus Abgasen sind oxidative, neutralisierende und reduktive Verfahren bekannt. Oxidative Verfahren setzen H₂O₂ oder HNO₃ als oxidierende Medien ein. H₂O₂ wird in alkalischen Waschlösungen eingesetzt und oxidiert NO zu NO₂, das gelöst und mit OH⁻-lonen neutralisiert wird:

NO + H₂O₂ → NO₂ + H₂O.

Diese Reaktion läuft überwiegend in der Gasphase ab, da NO kaum wasserlöslich ist. NO₂ hingegen ist gut wasserlöslich und disproportioniert in Wasser:

2 NO₂ (aq) + H₂O→ NO₂⁻ + NO₃⁻ + 2H⁺

2 H⁺ + 2 OH⁻→2 H₂O.

Durch Autooxidation von NO₂⁻, das neben NO₃⁻ entsteht, bildet sich auch wieder NO nach folgender Gleichung:

3 NO₂⁻ + 2 H⁺ → 2 NO + NO₃⁻ + H₂O.

Das NO entweicht aus der Lösung, da es nicht wasserlöslich ist. Die Auflösung von einem Teil NO₂ in Wasser setzt daher 30 % des Stickstoffes als NO wieder frei. Dies erfordert eine erneute Oxidation von NO, wodurch sich verlängerte Gesamtverweilzeiten ergeben. Zudem wird das Verfahren durch Verwendung von H₂O₂ verteuert. Aufgrund der hohen Verweilzeiten, die in der Größenordnung bis zu 20 Sekunden liegen, verläuft der Reinigungsvorgang sehr zeitaufwändig. Zudem sind hierfür große Apparate erforderlich.

Es ist bei oxidativen Verfahren auch bekannt, HNO₃ aus den NOₓ-Abgasen durch Absorption mit Oxidation in Salpetersäurelösungen zu gewinnen. Infolge des Restdampfdruckes von NOₓ über Salpetersäurelösungen sind keine hohen Absorptionsgrade möglich. Außerdem ist eine zweite Stufe zur Begrenzung der Säureemissionen erforderlich. Darüber hinaus haben nicht alle Anwender die Absicht oder die Möglichkeit, Salpetersäurelösungen herzustellen und zu verwerten.

Bei einer einfachen Neutralisation wird das in der zur Verfügung stehenden Verweilzeit oxidierbare NO durch Reaktion mit Luftsauerstoff zu NO₂ oxidiert und zusammen mit dem als NO₂ vorliegenden Teil der nitrosen Gase NOₓ in alkalischer Lösung absorbiert:

2 NO₂ (aq) + H₂O → NO₂⁻ + NO₃⁻ + 2 H⁺

2 H⁺ + 2 OH⁻→ 2 H₂O.

Nachteilig bei diesem Neutralisationsverfahren ist, dass bei einer Änderung des pH-Wertes die nitrosen Gase wieder freigesetzt werden. Durch die oben angegebene Autooxidation des Nitrits NO₃⁻ ist zudem der Gesamtwirkungsgrad beschränkt.

Die reduktiven Verfahren können in einer Gasphase oder in einer flüssigen Phase durchgeführt werden. Bei Durchführung in der Gasphase werden selektive (SCR - selective catalytic reduction) und unselektive (NSCR - nonselective catalytic reduction) Katalysatoren eingesetzt. Bei selektiven Katalysatoren läuft der Reinigungsvorgang wie folgt ab:

3 NO + 2 NH₃ → 2,5 N₂ + 3 H₂O

3 NO₂ + 4 NH₃ → 3,5 N₂ + 6 H₂O.

Bei Verwendung von unselektiven Katalysatoren erfolgt die Reduktion mit H₂, CH₄ oder CO. Dieses Verfahren wird bei Rauchgasen eingesetzt, da bei erhöhter Temperatur gearbeitet werden muss.

Auch in flüssiger Phase ist es möglich, die nitrosen Gase NOₓ zu reduzieren. Hierfür werden Chemikalien, wie Sulfid, Sulfit, Hydrogensulfit (auch als gasförmige Zugabe von SO₂) oder Thiosulfat, verwendet.

Der Erfindung liegt die Aufgabe zugrunde, das gattungsgemäße Verfahren so auszubilden, dass nitrose Gase kostengünstig, zeitsparend und dennoch zuverlässig aus den Abgasen entfernt werden können.

Diese Aufgabe wird beim gattungsgemäßen Verfahren erfindungsgemäß mit den kennzeichnenden Merkmalen des Anspruches 1 gelöst.

Beim erfindungsgemäßen Verfahren entfalten die Ammoniumionen in saurer Lösung eine Waschwirkung. Die nitrosen Gase werden zu Stickstoff reduziert. Die zur Erzeugung der Ammoniumionen verwendeten Mittel, beispielsweise (NH₄)₂SO₄ oder Ammionakgas, sind kostengünstige Komponenten, so dass das Reinigungsverfahren entsprechend kostengünstig durchgeführt werden kann. Häufig fallen diese Komponenten sogar als Abfallprodukte in Betrieben an, so dass sie vorteilhaft für das erfindungsgemäße Verfahren eingesetzt werden können.

Weitere Merkmale der Erfindung ergeben sich aus den weiteren Ansprüchen, der Beschreibung und der Zeichnung.

Die Erfindung wird anhand zweier in den Zeichnungen dargestellter Ausführungsbeispiele näher erläutert. Es zeigen
- Fig. 1: in schematischer Darstellung eine erste Ausführungsform einer Vorrichtung zur Durchführung des erfindungsgemäßen Verfahrens,
- Fig. 2: in schematischer Darstellung eine zweite Ausführungsform einer Vorrichtung zur Durchführung des erfindungsgemäßen Verfahrens.

Nitrose Gase in Abgasen bilden Schadstoffe, die nicht nur umweltverschmutzend, sondern auch gesundheitsgefährdend sind. Nitrose Gase bestehen in der Regel aus einem Gemisch aus NO und NO₂. Die nitrosen Gase lassen sich mittels einer Ammoniumsalze enthaltenden Lösung aus den Abgasen zuverlässig entfernen. Hierzu wird das Abgas mit den nitrosen Gasen durch die Lösung geführt, wobei der Waschvorgang nach folgender Gleichung abläuft:

3 NO₂ + 4 NH₄⁺ → 3,5 N₂ + 6 H₂O + 4 H⁺

Als Reaktionsprodukt dieses Waschvorganges entsteht somit Stickstoff. Da die Komproportionierung im sauren Bereich abläuft, entsteht gemäß der Gleichung weitere Säure. Es fallen aber keine weiteren Abfallprodukte an, die entsorgt werden müssten.

Der Waschvorgang kann in üblichen Kontaktapparaten, die zur Gaswäsche dienen, durchgeführt werden. Beispiele für solche Kontaktapparate sind Waschkolonnen mit einem Schüttbett oder festen Packungen, Blasensäulen und dergleichen.

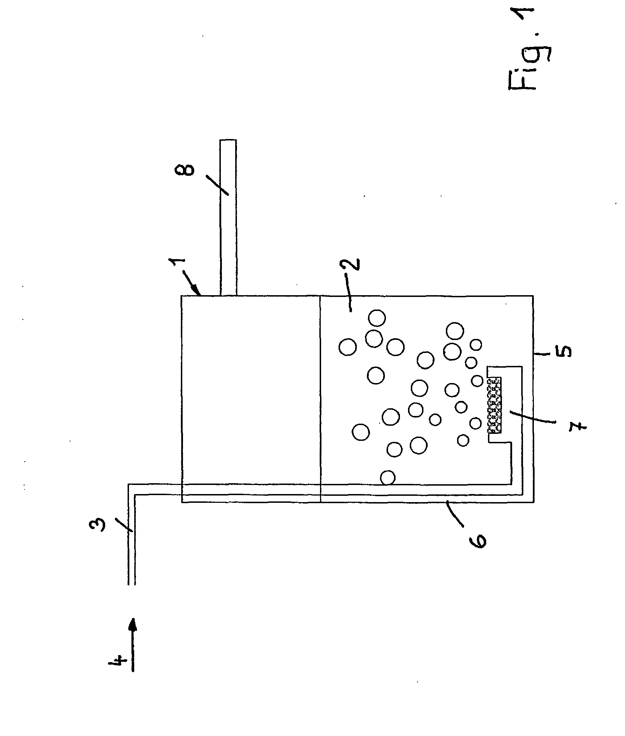

Fig. 1 zeigt beispielhaft einen solchen Wäscher mit einem Behälter 1, in dem sich die Waschflüssigkeit 2 befindet. In den Behälter 1 mündet wenigstens eine Leitung 3, über die das nitrose Gase enthaltende Abgas 4 zugeführt wird. Die Leitung 3 ist bis zum Boden 5 des Behälters 1 geführt. Die Leitung 3 verläuft vorteilhaft mit geringem Abstand längs der Innenseite der Wandung 6 des Behälters und weist etwa mittig zum Boden 5 liegend eine Verteilerdüse 7 auf, aus der das zu reinigende Abgas nach oben in die Waschflüssigkeit 2 austritt. Die im Abgas 4 befindlichen nitrosen Gase werden nach der oben beschriebenen Gleichung in der Waschflüssigkeit 2 aufgefangen und durch die Reaktion gemäß der obigen Gleichung zu Stickstoff umgewandelt. Das gereinigte Abgas strömt durch wenigstens eine Ausgangsleitung 8 nach außen, die oberhalb des Waschflüssigkeitsspiegels nahe dem oberen Rand des Behälters 1 vorgesehen ist.

Die Waschflüssigkeit 2 besteht aus Wasser, in dem Ammoniumsalze, beispielsweise Ammoniumsulfat oder Ammoniumhydrogensulfat, gelöst sind. Es kann aber auch Ammoniak im Wasser gelöst werden. Pro Kilogramm NO₂-Gas wird 0,4 kg Ammonium benötigt. Wird Ammoniumhydrogensulfat NH₄HSO₄ eingesetzt, dann werden pro 1 kg NO₂ 3,34 kg NH₄HSO₄ auf 40 Liter Wasser verwendet. Mit einer solchen Waschflüssigkeit können wenigstens 100 m³ Abgas von nitrosen Gasen NOₓ mit einer Konzentration von 8.000 mg/m³ gereinigt werden. Je nach Konzentration der nitrosen Gase im Gas 4 reicht die genannte Waschflüssigkeitsmenge auch zur Reinigung höherer Volumina aus. Bei einer Konzentration von z.B. 800 mg/m³ können 1.000 m³ Abgas gereinigt werden. Wird der Ersatz der Waschlösung kontinuierlich durchgeführt, benötigt man z.B. für einen Abgasvolumenstrom von 5.000 m³/h mit einer Konzentration von 800 mg/m³ eine Zuführung von 13,4 kg NaHSO₄ in 160 Liter Wasser, und die Abführung der äquivalenten Menge Abwasser.

Sind die Konzentrationen an nitrosen Gasen im Abgas 4 höher, wird eine größere Menge an Waschflüssigkeit und eine entsprechende Zugabe der Ammoniumsalze eingesetzt. In einem typischen Fall würde man für 3000 m³/h Abgas, das 10kg NO₂/h als nitroses Gas enthält, 33 kg/h NH₄HSO₄ in 400 I/h Wasser benötigen.

Die Dosierung des gasförmigen oder flüssigen Ammoniaks bzw. Ammoniumsalzes geschieht vorteilhaft über die Messung der NO₂-Konzentration in dem durch die Ausgangsleitung 8 abströmenden gereinigten Abgas. Steigt die Konzentration im gereinigten Abgas über einen erlaubten bzw. eingestellten Wert an, wird Ammoniumsalzlösung oder Ammoniakgas zudosiert. Dies erfolgt vorteilhaft automatisch, so dass eine kontinuierliche Reinigung der Abgase problemlos möglich ist.

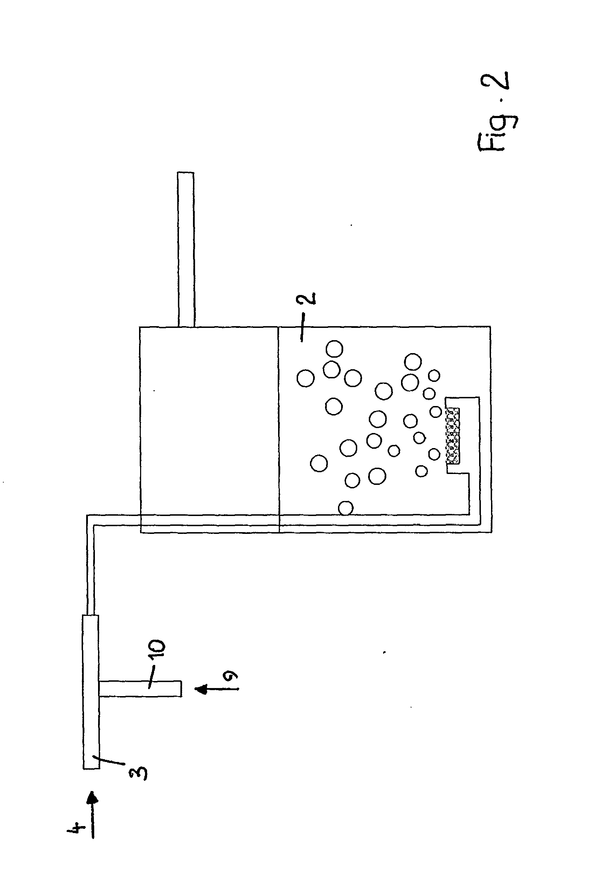

Fig. 2 zeigt die Möglichkeit, dem Abgas 4 Ammoniakgas 9 vor dem Eintritt in die Waschflüssigkeit 2 zuzugeben. Das Ammoniakgas 9 wird über eine Leitung 10 zugeführt, die in die Abgasleitung 3 mündet. Eine solche Ausführung ist dann von Vorteil, wenn das Ammoniakgas beispielsweise ein weiteres Abgas ist, das im gleichen Betrieb anfällt wie das die nitrosen Gase enthaltende Abgas 4. Dann kann in diesem Betrieb das Abgas in Form des Ammoniakgases zur Entfernung der nitrosen Gase im Abgas 4 herangezogen werden.

Die beschriebene Waschflüssigkeit 2 fällt in größeren Fabriken oftmals als Abfalllösung an. Infolge ihrer Zweitverwendung als Waschlösung bietet sie eine kostengünstige Alternative zu den herkömmlichen Reinigungsverfahren.

Der beschriebene Waschvorgang zur Entfernung der nitrosen Gase aus Abgasen wird vorteilhaft bei der Herstellung von Solarzellen, insbesondere Fotovoltaikzellen, eingesetzt. In solchen Solarzellenfabriken werden meist nur 50 bis 80 % Reduktion der NOₓ-Emissionen benötigt. Diese Reduktionen können mit dem beschriebenen Verfahren zuverlässig erreicht werden. Im Vergleich zu Neutralisationswäschern ist das beschriebene Verfahren wesentlich leistungsfähiger und wirkungsvoller.

Damit die nitrosen Gase zuverlässig aus den Abgasen 4 entfernt werden können, ist im Behälter 1 ein ausreichendes Flüssigkeitsvolumen vorhanden. Das zu reinigende Abgas 4 wird mit einem solchen Druck und damit mit einer solchen Geschwindigkeit in die Waschflüssigkeit 2 geleitet, dass eine zur Entfernung der nitrosen Gase ausreichende Gasverweilzeit gewährleistet ist. Dann ist sichergestellt, dass im Abgas enthaltenes NO zu NO₂ oxidiert wird:

NO + 0,5 O₂ → NO₂.

Diese Reaktion läuft spontan in das Gasphase ab und muss nicht gesondert initiiert werden.

Das Waschverfahren kann in einem Temperaturbereich von etwa 5°C bis etwa 40°C durchgeführt werden. Bei höheren Temperaturen ist die Reinigung der Abgase wirkungsvoller als bei tieferen Temperaturen. Vorteilhaft zirkuliert die Waschflüssigkeit 2 während des Waschvorganges, um eine optimale Reinigung des Abgases 4 zu erreichen. Für die Zirkulation wird die Waschflüssigkeit 2 mit einem Druck bis zu etwa 3 bar in den Behälter 1 eingebracht. Die Konzentration an Ammoniumsalzen kann bis zu etwa 5 % Mol NH₄⁺/I-Lösung reichen.

Das zu reinigende Abgas kann eine Temperatur von etwa 0°C bis zu etwa 200°C haben. Dabei kann das Abgas unter einem Druck bis zu etwa 3 bar in die Waschflüssigkeit 2 geleitet werden. Das Abgas 4 kann bis zu etwa 1000 mg/m³ NOₓ-Gas enthalten. Das für die Waschflüssigkeit 2 eingesetzte Wasser ist vorteilhaft neutral. Durch den Reinigungsprozess wird die Flüssigkeit sauer, d.h. der pH-Wert wird kleiner als 7. Durch die Reaktion der Ammoniumsalze mit den nitrosen Gasen im Abgas 4 bilden sich Säuren, die zur pH-Wert-Erniedrigung des Wassers führen. Eine Neutralisation ist zum Erhalt der Waschfunktion nicht notwendig.

Es hat sich gezeigt, dass pro kg NO₂ etwa 0,4 kg Ammonium benötigt werden.

Die zur Reinigung der Abgase 4 eingesetzte Waschflüssigkeit ist kostengünstig, zumal sie, je nach Industriebetrieb, als Abfalllösung vorhanden ist. Die eingesetzten Waschapparate können konstruktiv einfach ausgebildet sein.

Das beschriebene Verfahren ist auch zur Reinigung von relativ kleinen Luftvolumina hervorragend geeignet. Solche geringen Abgasmengen treten beispielsweise bei Nassbänken zum Silizium-Ätzen auf. Für solche Anwendungsfälle kann das Verfahren hervorragend eingesetzt werden.

Bei Einsatz von (NH₄)₂SO₄-Lösungen nimmt bei pH-neutral und mit zunehmender Reinigungsdauer die Reinigungsaktivität zu. Dies ist u.a. darauf zurückzuführen, dass mit zunehmender Reinigungsdauer die Waschflüssigkeit 2 zunehmend sauer wird, da durch das beim Reinigungsprozess anfallende NO₂ eine Verschiebung des pH-Wertes zu niedrigeren Werten auftritt. Im sauren Bereich nimmt die Reaktionsgeschwindigkeit beim Waschvorgang zu.

Da für den Waschvorgang ein ausreichendes Flüssigkeitsvolumen vorhanden sein muss, wird als Waschvorrichtung vorteilhaft eine Vorrichtung vom Typ einer Blasensäule eingesetzt. Solche Apparaturen sind bekannt und werden hinsichtlich ihrer konstruktiven Gestaltung darum nicht näher erläutert.

Als Waschvorrichtung können auch Luftwäscher mit Füllkörpern, so genannte Scrubber, eingesetzt werden. Solche Luftwäscher zeichnen sich durch ihre kleinen Dimensionen aus, so dass sie vorteilhaft dort eingesetzt werden können, wo grosse Abgasvolumina zu erwarten sind.

Bei Verwendung von Ammoniumsulfat ergibt sich der Vorteil, dass es sehr kostengünstig ist und preisgünstiger erworben werden kann als das bislang verwendete H₂O₂. Ein weiterer Vorteil der Verwendung von Ammoniumsulfat liegt darin, dass es als Abwasser aus Ammoniumscrubbern anfällt und als Waschflüssigkeit zur Entfernung der nitrosen Gase aus den Abgasen eingesetzt werden kann.

## Patentansprüche

1. Verfahren zur Reinigung von nitrose Gase enthaltenden Abgasen, bei dem das Abgas durch eine Waschlösung geleitet wird, die eine reduzierende Komponente aufweist, mit der die nitrosen Gase zu Stickstoff reduziert werden,
**dadurch gekennzeichnet, dass** als Komponente zur Reduktion der nitrosen Gase (NOₓ) Ammoniumionen (NH₄⁺) verwendet werden.

2. Verfahren nach Anspruch 1,
**dadurch gekennzeichnet, dass** die Waschlösung aus Wasser und Ammoniumsulfat ((NH₄)₂SO₄) enthält.

3. Verfahren nach Anspruch 1,
**dadurch gekennzeichnet, dass** zur Reduktion der nitrosen Gase (NOₓ) Ammoniakgas verwendet wird.

4. Verfahren nach Anspruch 3,
**dadurch gekennzeichnet, dass** das Ammoniakgas dem Abgas (4) vor der Einleitung in die Waschlösung (2) beigegeben wird.

5. Verfahren nach einem der Ansprüche 1 bis 4,
**dadurch gekennzeichnet, dass** der Waschvorgang nach der Gleichung
3 NO₂ + 4 NH₄⁺ → 3,5 N₂ + 6 H₂O + 4 H⁺
abläuft.

6. Verfahren nach einem der Ansprüche 1 bis 5,
**dadurch gekennzeichnet, dass** die Waschlösung (2) eine Temperatur im Bereich von etwa 5°C bis etwa 40°C hat.

7. Verfahren nach einem der Ansprüche 1 bis 6,
**dadurch gekennzeichnet, dass** die Waschlösung (2) bis etwa 5 % mol Ammoniumionen (NH₄⁺)/I enthält.

8. Verfahren nach einem der Ansprüche 1 bis 7,
**dadurch gekennzeichnet, dass** die Waschlösung (2) während des Reinigungsvorganges zirkuliert.

9. Verfahren nach einem der Ansprüche 1 bis 8,
**dadurch gekennzeichnet, dass** das Abgas (4) in einem Temperaturbereich zwischen etwa 0°C und etwa 200°C der Waschlösung (2) zugeführt wird.

10. Verfahren nach einem der Ansprüche 1 bis 9,
**dadurch gekennzeichnet, dass** das Abgas (4) unter einem Druck zwischen etwa 0 bar und etwa 3 bar zugeführt wird.

11. Verfahren nach einem der Ansprüche 1 bis 10,
**dadurch gekennzeichnet, dass** das Abgas (4) bis etwa 10.000 mg/m³ nitrose Gase (NOₓ) enthält.

12. Verfahren nach einem der Ansprüche 1 bis 11,
**dadurch gekennzeichnet, dass** die Reinigung kontinuierlich vorgenommen wird.
